# EUROPÄISCHE PATENTSCHRIFT

(11) **EP 2 509 867 B1**
(45) Veröffentlichungstag und Bekanntmachung des Hinweises auf die Patenterteilung: **26.06.2019**
(21) Anmeldenummer: 10798261.3
(22) Anmeldetag: 07.12.2010
(51) Int. Cl.: B60N 2/23, B60N 2/42, B60N 2/427, B64D 11/06

(54) **SITZVORRICHTUNG MIT ENERGIEABSORPTIONSEINHEIT**
SEAT DEVICE COMPRISING AN ENERGY ABSORPTION UNIT
DISPOSITIF D'ASSISE COMPRENANT UNE UNITÉ D'ABSORPTION D'ÉNERGIE

(30) Priorität: 11.12.2009 DE 102009057880
(43) Veröffentlichungstag der Anmeldung: 17.10.2012
(73) Patentinhaber: Recaro Aircraft Seating GmbH & Co. KG, 74523 Schwäbisch Hall (DE)
(72) Erfinder: FUNKE, Matthias, Keller, TX 76248 (US); MARTENS, Jan, 74523 Schwäbisch Hall (DE)
(74) Vertreter: Daub, Thomas
(86) Internationale Anmeldenummer: PCT/EP2010/007430
(87) Internationale Veröffentlichungsnummer: WO 2011/069641

(56) Entgegenhaltungen:
- EP-A1- 2 127 941
- WO-A1-97/29923
- WO-A2-2008/017794
- DE-A1- 19 807 581
- DE-A1- 19 931 894
- GB-A- 2 418 843
- GB-A- 2 450 612
- US-A- 4 394 047
- US-A- 5 320 308

## Beschreibung

### Stand der Technik

Im Falle eines Aufprallereignisses bei Fahrzeugen, die zur Beförderung von Passagieren vorgesehen und zu diesem Zweck mit Fahrgastsitzen ausgestattet sind, ist es von besonderer Bedeutung, die bei der plötzlichen Verzögerung frei werdende Energie von den Passagieren abzulenken.

Aus dem US-Patent 4,349,167 ist bereits ein Fahrgastsitz bekannt, der mehrere Energieabsorptionselemente aufweist.

Weitere Fahrgastsitze mit Energieabsorptionselementen sind aus den Dokumenten GB 2418 843 A, GB 2 450 612 A, DE 199 31 894 A1, WO 97/29923 A1 und DE 198 07 581 A1 bekannt.

Der vorliegenden Erfindung liegt insbesondere die Aufgabe zugrunde, eine einfache, kostengünstige und platzsparende Lösung zur Absorption von Bewegungsenergie im Falle eines Aufprallereignisses bei Fahrzeugen bereitzustellen.

Diese Aufgabe wird durch eine Sitzvorrichtung eines Fahrgastsitzes gemäß dem Patentanspruch 1 gelöst. Weitere vorteilhafte Weiterbildungen der Erfindung können den Unteransprüchen entnommen werden.

### Vorteile der Erfindung

Die Erfindung geht aus von einer Sitzvorrichtung eines Fahrgastsitzes, der eine Rückenlehne, die in einem normalen Verstellbereich von zumindest einer stabilen Komfortposition durch eine Bewegung in eine Vorwärtsrichtung bis zu einer Normalposition verstellbar ist, und eine Sitzstruktur zur Befestigung des Fahrgastsitzes an einem Boden aufweist, mit zumindest einem Stützelement zur Kopplung der Rückenlehne an die Sitzstruktur und mit zumindest einer Energieabsorptionseinheit zur Aufnahme von Bewegungsenergie im Falle eines Aufprallereignisses, wobei die Energieabsorptionseinheit das zumindest eine Stützelement und ein von dem Stützelement separat ausgebildetes Energieabsorptionselement umfasst und das zumindest eine Stützelement und das Energieabsorptionselement im Falle des Aufprallereignisses zum Abbau einer Aufprallenergie zusammenwirken, wobei das Energieabsorptionselement dazu vorgesehen ist, bei einer Überschreitung des normalen Verstellbereichs der Rückenlehne durch plastische Verformung Energie aufzunehmen, und wobei das zumindest eine Stützelement zumindest ein Lagerelement mit einer Lagerachse zur drehbaren Lagerung der Rückenlehne aufweist, und mit zumindest einem Kopplungselement umfasst, das bei der Überschreitung des normalen Verstellbereichs der Rückenlehne ein Drehmoment um die Lagerachse auf das zumindest eine Energieabsorptionselement ausübt.

**Es** wird vorgeschlagen, dass das Energieabsorptionselement das Stützelement zumindest teilweise umgreift, wobei das bei der Überschreitung des normalen Verstellbereichs der Rückenlehne von dem Kopplungselement auf das zumindest eine Energieabsorptionselement ausgeübte Drehmoment um die Lagerachse eine Klemmung des Energieabsorptionselements bewirkt, wobei das Energieabsorptionselement zumindest ein Zentrierelement umfasst, das dazu vorgesehen ist, das Energieabsorptionselement im Falle der Überschreitung des normalen Verstellbereichs der Rückenlehne zu zentrieren , wobei das Stützelement ein zu dem Zentrierelement des Energieabsorptionselements korrespondierendes Zentrierelement aufweist. Unter "separat" soll in diesem Zusammenhang insbesondere verstanden werden, dass das Stützelement und das Energieabsorptionselement zumindest zweiteilig ausgebildet sind. Dadurch kann eine einfache und platzsparende Lösung zur Absorption von Bewegungsenergie im Falle des Aufprallereignisses bei Fahrzeugen bereitgestellt werden. Durch das separat ausgebildete Energieabsorptionselement der Energieabsorptionseinheit kann darüber hinaus eine ungehinderte Bewegung der Rückenlehne im normalen Verstellbereich und eine Energieübertragung von Bewegungsenergie auf das Energieabsorptionselement nur im Falle des Aufprallereignisses ermöglicht werden. Die Sitzvorrichtung ist ferner mit Vorteil bei bereits bestehenden Fahrgastsitzen nachrüstbar.

Wenn innerhalb des normalen Verstellbereichs der Rückenlehne ein erster Krafteinleitungsweg einer auf die Rückenlehne wirkenden Kraft in die Sitzstruktur existiert und bei einer Überschreitung des normalen Verstellbereichs der Rückenlehne ein zweiter Krafteinleitungsweg einer auf die Rückenlehne wirkenden Kraft in die Sitzstruktur existiert und das Energieabsorptionselement eine Umlenkung eines Kraftflusses vom ersten Krafteinleitungsweg zum zweiten Krafteinleitungsweg bewirkt, kann eine effektive Umlenkung der Kraftwirkung durch das Energieabsorptionselement zur Absorption von Energie erreicht werden.

Des Weiteren wird vorgeschlagen, dass das Energieabsorptionselement zumindest ein Schwächungselement zur Schwächung der mechanischen Festigkeit aufweist. Durch das zumindest eine Schwächungselement kann eine einfache Anpassung der mechanischen Festigkeit an im Falle des Aufprallereignisses zu erwartende Kräfte auf die Rückenlehne zur Optimierung einer Energieabsorption durch das Energieabsorptionselement erzielt werden.

Wenn das Energieabsorptionselement zumindest zwei Schwächungselemente aufweist, die dazu vorgesehen sind, im Falle des durch Überschreitung des normalen Verstellbereichs der Rückenlehne erzeugten zweiten Krafteinleitungswegs eine Sollbruchrichtung festzulegen, kann eine kontrollierte Verformung des Energieabsorptionselements erreicht werden. Besonders vorteilhaft kann das Energieabsorptionselement Schwächungselemente aufweisen, die zumindest zwei Sollbruchrichtungen festlegen, die vorzugsweise parallel verlaufen, wodurch im Falle des Aufprallereignisses eine kontrollierte Aufteilung des Energieabsorptionselement in mehrere Abschnitte ermöglicht wird. Wenn die Aufteilung in mehrere Abschnitte mit einer Vergrößerung von Abständen der Einzelabschnitte verbunden ist, kann insbesondere eine bestehende Sicherheitsvorschrift des Flugverkehrs, nach der nach einem Eintritt des Aufprallereignisses eine leichte Verstellung der Rückenlehne in die Normalposition gewährleistet sein muss, besonders einfach erfüllt werden.

Ganz besonders vorteilhaft ist es, wenn das Zentrierelement des Stützelements einen keilförmigen Querschnitt aufweist, da bei entsprechender Ausgestaltung neben einer Zentrierungswirkung eine effektive Schneidwirkung des Stützelements ermöglicht werden kann, die eine Aufnahme einer großen Energiemenge durch das Energieabsorptionselement ermöglicht.

Weiterhin wird vorgeschlagen, dass die Energieabsorptionseinheit zumindest ein Sicherungselement aufweist, das dazu vorgesehen ist, eine Bewegung der Rückenlehne innerhalb des normalen Verstellbereichs in zumindest einer Richtung zu begrenzen und bei einer Überschreitung einer vorbestimmten Kraftwirkung auf die Rückenlehne in zumindest einer Richtung eine Überschreitung des Verstellbereichs der Rückenlehne zu ermöglichen. Vorteilhaft kann dadurch die Bewegung der Rückenlehne in einem normalen Betriebsmodus des Fahrgastsitzes innerhalb des normalen Verstellbereichs kontrolliert werden, und im Falle des Aufprallereignisses kann durch eine kontrollierte Überschreitung des Verstellbereichs der Rückenlehne Bewegungsenergie von der Rückenlehne auf die Energieabsorptionseinheit übertragen werden.

Wenn eine nach einer Überschreitung des normalen Verstellbereichs der Rückenlehne von dem Energieabsorptionselement aufgenommene Verformungsenergie im Wesentlichen proportional zu einer von dem Energieabsorptionselement zurückgelegten Verschiebungsstrecke ist, können vorteilhaft plötzliche Beschleunigungen während der Energieabsorption im Energieabsorptionselement vermieden und ein gleichmäßiger Energieabbau der Bewegungsenergie der Rückenlehne erreicht werden. Unter "im Wesentlichen linear" soll in diesem Zusammenhang insbesondere verstanden werden, dass ein Proportionalitätsfaktor zwischen der von dem Energieabsorptionselement aufgenommenen Energie und der vom Energieabsorptionselement zurückgelegten Verschiebungsstrecke um weniger als 50% variiert.

Besonders vorteilhaft ist es unter fertigungstechnischen Gesichtspunkten, wenn das Energieabsorptionselement in zumindest einer Schnittebene ein U-förmiges Profil aufweist, da bei entsprechender Ausgestaltung durch Einsatz von Umbiege- und Stanztechnik eine einfache und kostengünstige Fertigung des Energieabsorptionselements ermöglicht werden kann. Durch die U-förmige Formgebung kann zugleich eine günstige Krafteinleitung in das Energieabsorptionselement erreicht werden.

Wenn das Energieabsorptionselement im Wesentlichen aus Edelstahl besteht, können vorteilhaft große Energiebeträge absorbiert und durch den Einsatz bekannter Verformungstechnik kostengünstige Lösungen bereitgestellt werden. Unter "im Wesentlichen" soll in diesem Zusammenhang insbesondere verstanden werden, dass das Energieabsorptionselement vorzugsweise zu mehr als 50% und, besonders vorteilhaft, zu mehr als 70% aus Edelstahl besteht.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine stark schematisierte Seitenansicht eines Fahrgastsitzes,
- Fig. 2: eine Sitzvorrichtung eines Fahrgastsitzes mit einer Energieabsorptionseinheit im eingebauten Zustand in einer rückseitigen Ansicht mit einer Rückenlehne im normalen Verstellbereich,
- Fig. 3: die Sitzvorrichtung gemäß der Fig. 2 in einer Ansicht von schräg vorn,
- Fig. 4: eine Explosionsansicht einer Energieabsorptionseinheit,
- Fig. 5: eine Energieabsorptionseinheit in einem montierten Zustand,
- Fig. 6: eine Sitzvorrichtung eines Fahrgastsitzes mit einer Energieabsorptionseinheit im eingebauten Zustand, nach einer Überschreitung des normalen Verstellbereichs der Rückenlehne,
- Fig. 7: einen ersten Krafteinleitungsweg im normalen Verstellbereich der Rückenlehne,
- Fig. 8: einen zweiten Krafteinleitungsweg nach einer Überschreitung des normalen Verstellbereichs der Rückenlehne und
- Fig. 9: ein weiteres Ausführungsbeispiel eines Energieabsorptionselements.

### Beschreibung der Ausführungsbeispiele

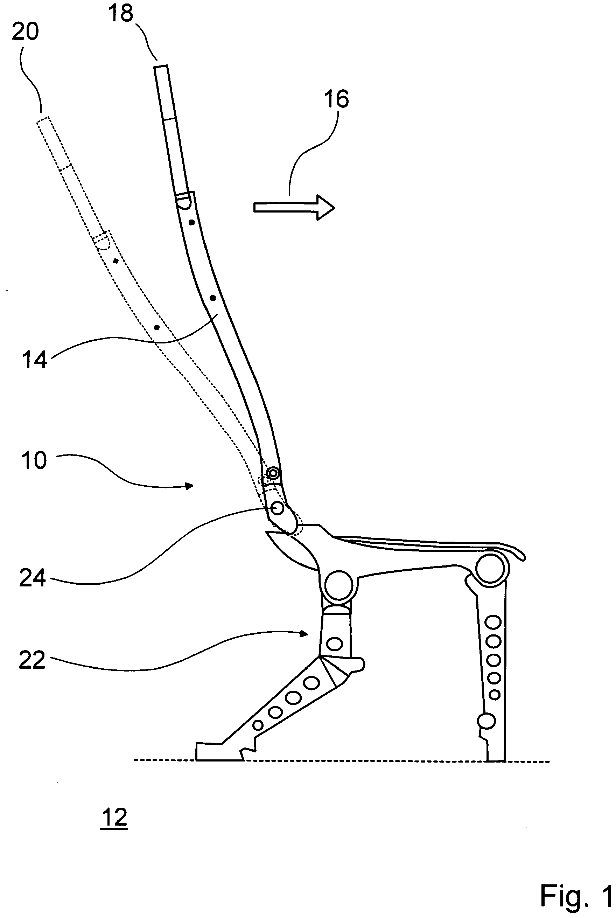

Figur 1 zeigt in einer stark schematisierten Seitenansicht einen als Flugzeugsitz ausgebildeten Fahrgastsitz 10, der auf einem Boden 12 einer nicht näher dargestellten Innenkabine eines Flugzeugs angeordnet ist. Der Fahrgastsitz 10 kann aber auch in anderen Transportmitteln, etwa in Bussen, Eisenbahnen und Fährschiffen, verwendet werden. Der Fahrgastsitz 10 ist Teil einer nicht näher dargestellten Fahrgastsitzreihe, von denen mehrere in gleicher Ausrichtung hintereinander in der Innenkabine des Flugzeugs in an sich bekannter Weise angeordnet sind.

Der Fahrgastsitz weist eine Rückenlehne 14 auf, die in einem normalen Verstellbereich von einer stabilen Komfortposition 20 durch eine Bewegung in eine Vorwärtsrichtung 16 bis zu einer stabilen Normalposition 18 verstellbar ist, und ist mit einer Sitzstruktur 22 ausgestattet, mit der der Fahrgastsitz 10 in an sich bekannter Weise an dem Boden 12 der Innenkabine befestigt ist. Eine Verstellung der Rückenlehne 14 erfolgt als Drehbewegung um einen Lagerzapfen 24, der mit einem Sitzteiler 26 der Sitzstruktur 22 verbunden und senkrecht zu der Vorwärtsrichtung 16 angeordnet ist.

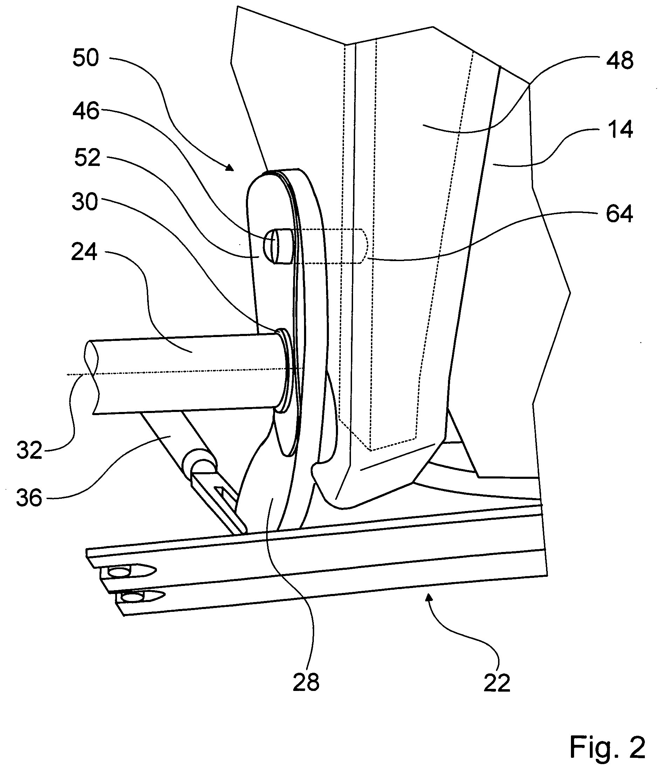

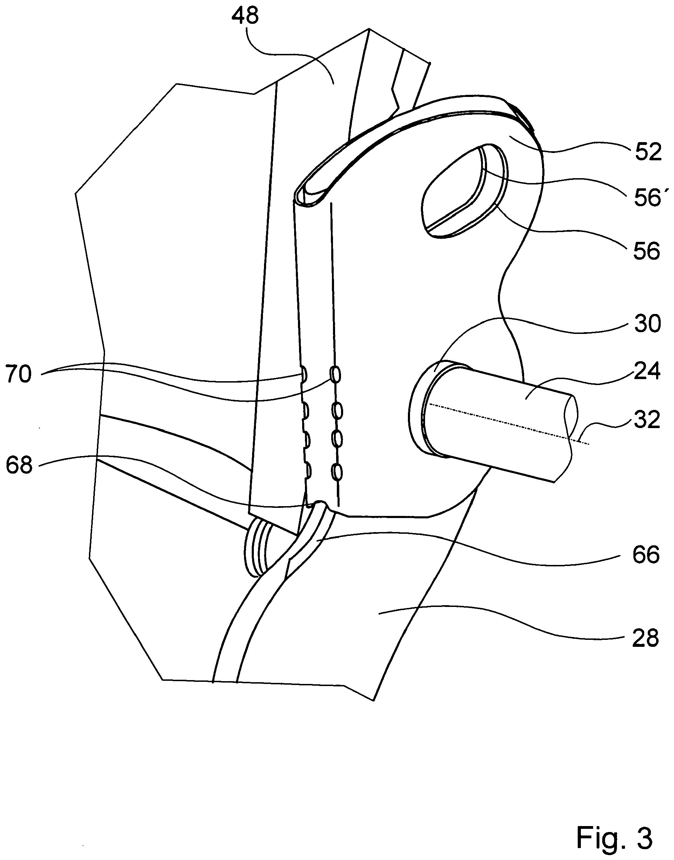

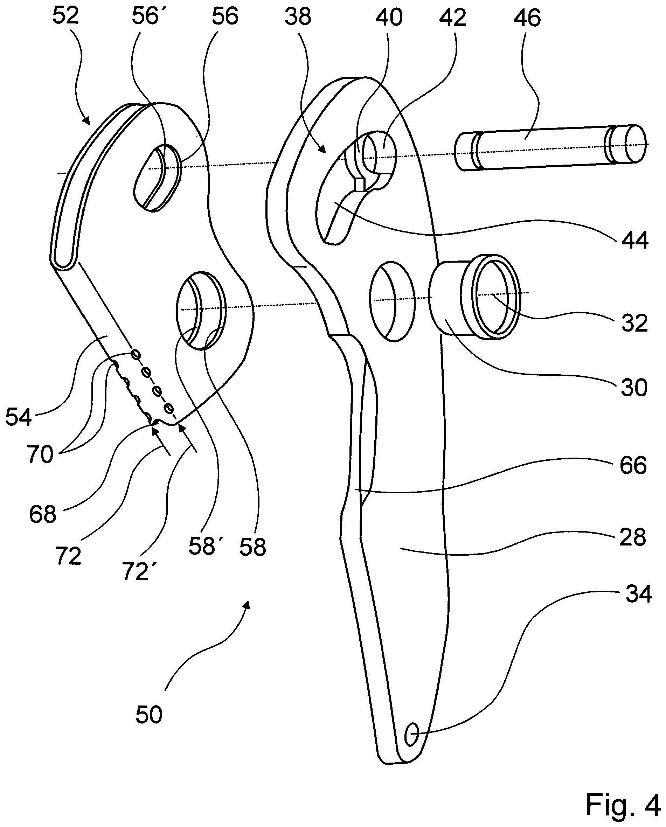

Der Fahrgastsitz 10 ist mit einer Sitzvorrichtung ausgestattet, die ein an einer Seite der Rückenlehne 14 angeordnetes Stützelement 28 umfasst (Fig. 2 und 3). Das Stützelement 28 ist zur Kopplung der Rückenlehne 14 an die Sitzstruktur 22 vorgesehen und dient dazu, die Rückenlehne 14 in der Normalposition 18 gegen die Sitzstruktur 22 abzustützen. Das Stützelement 28 umfasst ein als Lagerbuchse zur Aufnahme des Lagerzapfens 24 ausgebildetes Lagerelement 30 mit einer Lagerachse 32 zur drehbaren Lagerung der Rückenlehne 14 um die Lagerachse 32 (Fig. 4). An einem seiner Enden ist das Stützelement 28 mit einem Durchgangsloch 34 versehen, das zur Ankopplung des Stützelements 28 an eine Gasdruckfeder 36 dient, die zur Unterstützung einer Bewegung der Rückenlehne 14 von der Komfortposition 20 in die Normalposition 18 in an sich bekannter Weise vorgesehen ist (Fig. 2).

An einem oberen Ende ist das Stützelement 28 mit einer Langlocheinheit 38 ausgestattet (Fig. 4), die in einer in Bezug auf die Lagerachse 32 radialen Richtung angeordnet ist. Die Langlocheinheit 38 umfasst ein als Steg ausgebildetes Sicherungselement 40, das die Langlocheinheit 38 in eine kleinere Sektion 42 und eine größere Sektion 44 unterteilt, wobei die kleinere Sektion 42 der Langlocheinheit 38 zur Aufnahme eines als Zapfen ausgebildeten Kopplungselements 46 der Sitzvorrichtung vorgesehen ist. Das Sicherungselement 40 ist dazu vorgesehen, eine Bewegung der Rückenlehne 14 innerhalb des normalen Verstellbereichs in der Vorwärtsrichtung 16 zu begrenzen. Das Kopplungselement 46 ist fest mit einem U-förmigen Rahmenelement 48 der Rückenlehne 14 verbunden (Fig. 2 und 3), so dass bei einer Bewegung der Rückenlehne 14 im normalen Verstellbereich sowohl die Rückenlehne 14 als auch das Stützelement 28 um die Lagerachse 32 geschwenkt werden.

Ferner weist die Sitzvorrichtung eine Energieabsorptionseinheit 50 auf, die zur Aufnahme von Bewegungsenergie im Falle eines Aufprallereignisses vorgesehen ist. Die Energieabsorptionseinheit 50 umfasst das Stützelement 28 und ist mit einem von dem Stützelement 28 separat ausgebildeten Energieabsorptionselement 52 ausgestattet (Fig. 4).

Das Stützelement 28 und das Energieabsorptionselement 52 wirken im Falle des Aufprallereignisses zum Abbau einer Aufprallenergie in einer Weise zusammen, die im Folgenden näher beschrieben wird.

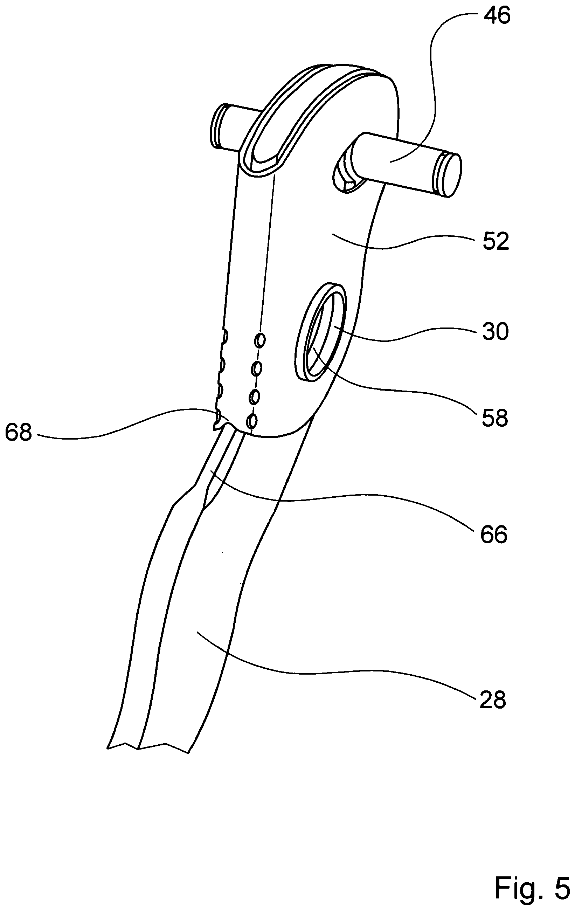

Das Energieabsorptionselement 52 besteht aus einem dünnen Blech aus Edelstahl (Fig. 4). Es weist in einer Schnittebene, die parallel zum Boden 12 der Innenkabine liegt, ein U-förmiges Profil auf und ist ferner mit mehreren, symmetrisch zu einer Vorderkante 54 des Energieabsorptionselements 52 angeordneten Durchgangslöchern 56, 56', 58, 58' ausgestattet. Die Durchgangslöcher 56, 56' sind als Langlöcher ausgebildet, deren Mittellinien in Bezug auf die Lagerachse 32 in einer radialen Richtung ausgerichtet sind. In einem betriebsbereiten Zustand (Fig. 5) umgreift das U-förmige Profil des Energieabsorptionselements 52 ein oberes Ende des Stützelements 28, wobei die unteren Durchgangslöcher 58, 58' des Energieabsorptionselements 52 mit dem Lagerelement 30 des Stützelements 28 fluchten und die zwei in einem oberen Teil des Energieabsorptionselements 52 angeordneten Durchgangslöcher 56, 56' die kleinere Sektion 42 der Langlocheinheit 38 des Stützelements 28 zur Aufnahme des Kopplungselements 46 freigeben.

In den beiden unteren Durchgangslöchern 58, 58' des Energieabsorptionselements 52 ist die Lagerbuchse des Stützelements 28 frei drehbar (Fig. 4). Durch das als Zapfen ausgebildete Kopplungselement 46 der Sitzvorrichtung, das sowohl die kleinere Sektion 42 der Langlocheinheit 38 des Stützungselements 28 als auch die beiden im oberen Teil des Energieabsorptionselements 52 angeordneten Durchgangslöcher 56, 56' durchdringt, wird bei einer Bewegung im normalen Verstellbereich der Rückenlehne 14 neben der Rückenlehne 14 und dem Stützelement 28 auch das Energieabsorptionselement 52 um die Lagerachse 32 geschwenkt. Die Energieabsorptionseinheit 50 weist ein von den als Langlöeher ausgebildeten Durchgangslöchern 56, 56' gebildetes Verzögerungselement auf, das im Falle des Aufprallereignisses nach einer Überschreitung des normalen Verstellbereichs der Rückenlehne 14 den Abbau der Aufprallenergie um eine vorbestimmte Zeitspanne verzögert. Eine Mitnahmebewegung des Energieabsorptionselements 52 durch das Kopplungselement 46 erfolgt nach einer Überschreitung des normalen Verstellbereichs der Rückenlehne 14 in einer Bewegung der Rückenlehne 14 in Vorwärtsrichtung 16 verzögert, da das Kopplungselement 46 zunächst einen der Vorwärtsrichtung 16 zugewandten Rand der Durchgangslöcher 56, 56' erreichen muss, bevor das Energieabsorptionselement 52 von dem Kopplungselement 46 mitgeführt werden kann.

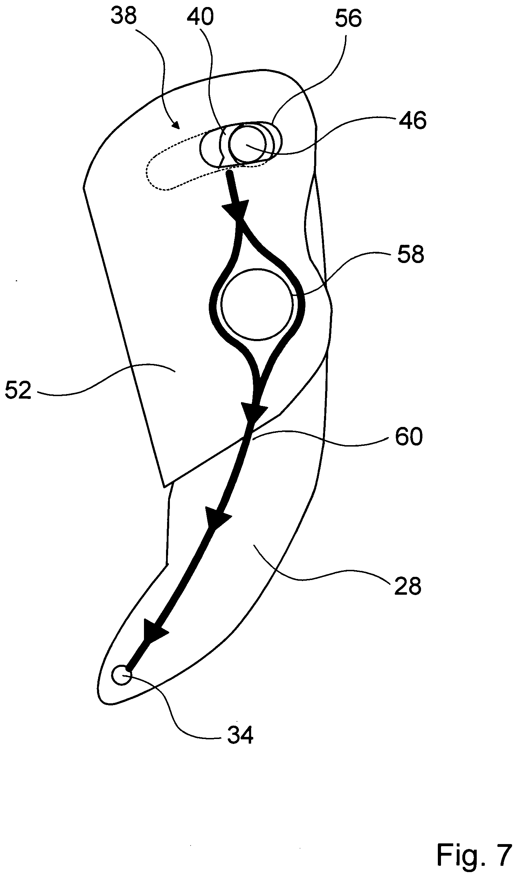

In der Fig. 7 ist ein innerhalb des normalen Verstellbereichs der Rückenlehne 14 existierender erster Krafteinleitungsweg 60 einer auf die Rückenlehne 14 in der Vorwärtsrichtung 16 wirkenden Kraft in die Sitzstruktur 22 dargestellt. Er verläuft von Kopplungsstellen 64 des U-förmigen Rahmenelements 48 der Rückenlehne 14 mit den als Zapfen ausgebildeten Kopplungselementen 46 der Sitzvorrichtung (Fig. 2) entlang des Stützelements 28, weiter über die Gasdruckfeder 36, die an ihrem dem Stützelement 28 abgewandten Ende an die Sitzstruktur 22 angelenkt ist, und endet in der Sitzstruktur 22. Das Energieabsorptionselement 52 ist in diesem Betriebszustand durch die Rückenlehne 14 kräftemäßig unbelastet.

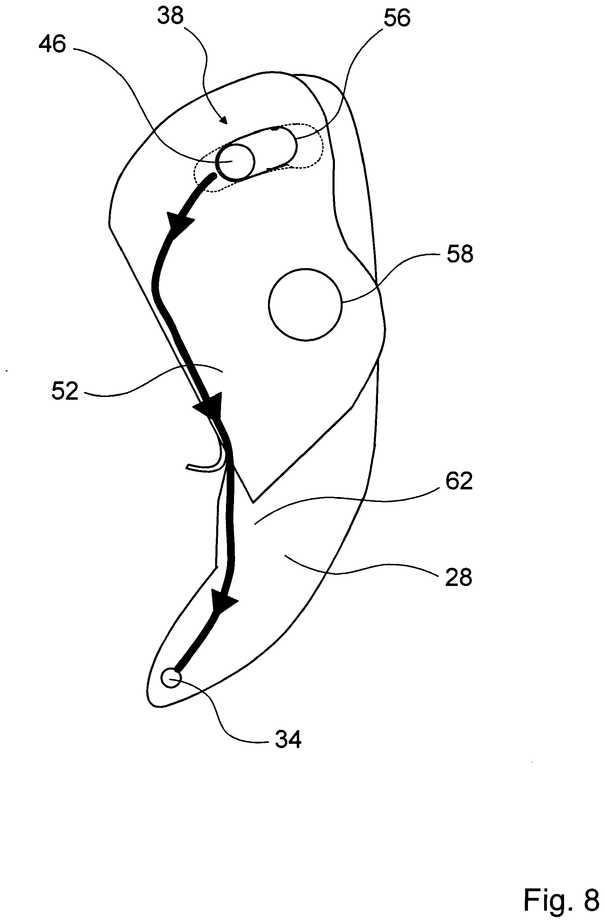

Bei Überschreitung einer vorbestimmten, in Vorwärtsrichtung wirkenden Kraft auf die Rückenlehne 14, beispielsweise im Falle des Aufprallereignisses, ist das als Steg ausgebildete Sicherungselement 40 dazu vorgesehen, zu brechen, die größere Sektion 44 der Langlocheinheit 38 des Stützelements 28 für eine Bewegung des als Zapfen ausgebildeten Kopplungselements 46 der Sitzvorrichtung freizugeben und eine Überschreitung des normalen Verstellbereichs der Rückenlehne 14 in der Vorwärtsrichtung 16 zu ermöglichen (Fig. 4). Bei einer weiter in Vorwärtsrichtung 16 voranschreitenden Bewegung der Rückenlehne 14 schlägt das als Zapfen ausgebildete Kopplungselement 46 der Sitzvorrichtung an den der Vorwärtsrichtung 16 zugewandten Rand der Durchgangslöcher 56, 56' an. In diesem Betriebszustand übt das Kopplungselement 46 ein Drehmoment um die Lagerachse 32 auf das Energieabsorptionselement 52 aus und bewirkt eine Klemmung des Energieabsorptionselements 52 mit einem als Schneidkante ausgebildeten Zentrierelement 66 des Stützelements 28 (Fig. 8). Durch das Verzögerungselement wird eine zeitliche Verzögerung der Mitnahmebewegung des Energieabsorptionselements 52 durch das Kopplungselement 46 bewirkt, wodurch sich im Falle des Aufprallereignisses ein Aufprall eines Fahrgastes auf eine Rückseite einer Rückenlehne 14 des vor dem Fahrgast angeordneten Fahrgastsitzes 10 zeitlich steuern und damit eine Aufprallposition auf der Rückseite der Rückenlehne 14 beeinflussen lässt.

Nach der Überschreitung des normalen Verstellbereichs existiert ein zweiter Krafteinleitungsweg 62 der auf die Rückenlehne 14 wirkenden Kraft in die Sitzstruktur 22 (Fig. 8). Der zweite Krafteinleitungsweg 62 verläuft, abweichend von dem ersten Krafteinleitungsweg 60 im Betriebszustand des normalen Verstellbereichs der Rückenlehne 14, von den Kopplungsstellen 64 des U-förmigen Rahmenelements 48 der Rückenlehne 14 (Fig. 2 und 3) mit den als Zapfen ausgebildeten Kopplungselementen 46 der Sitzvorrichtung entlang der Vorderkante 54 des Energieabsorptionselements 52, mündet an einem unteren Ende der Vorderkante 54 des Energieabsorptionselements 52 in das Stützelement 28, verläuft über die Gasdruckfeder 36 und endet in der Sitzstruktur 22. Bei der Überschreitung des normalen Verstellbereichs der Rückenlehne 14 bewirkt das Energieabsorptionselement 52 eine Umlenkung eines Kraftflusses vom ersten Krafteinleitungsweg 60 zum zweiten Krafteinleitungsweg 62. Das Energieabsorptionselement 52 ist in diesem Betriebszustand durch die Rückenlehne 14 kräftemäßig belastet, da das Kopplungselement 46 der Sitzvorrichtung ein Drehmoment um die Lagerachse 32 auf das Energieabsorptionselement 52 ausübt.

Das Energieabsorptionselement 52 ist dazu vorgesehen, bei einer Überschreitung des normalen Verstellbereichs der Rückenlehne 14 durch plastische Verformung Energie aufzunehmen. Die aufgenommene Energie wird einer Bewegungsenergie der Rückenlehne 14 entzogen und durch die plastische Verformung des Energieabsorptionselements 52 in Wärme umgewandelt.

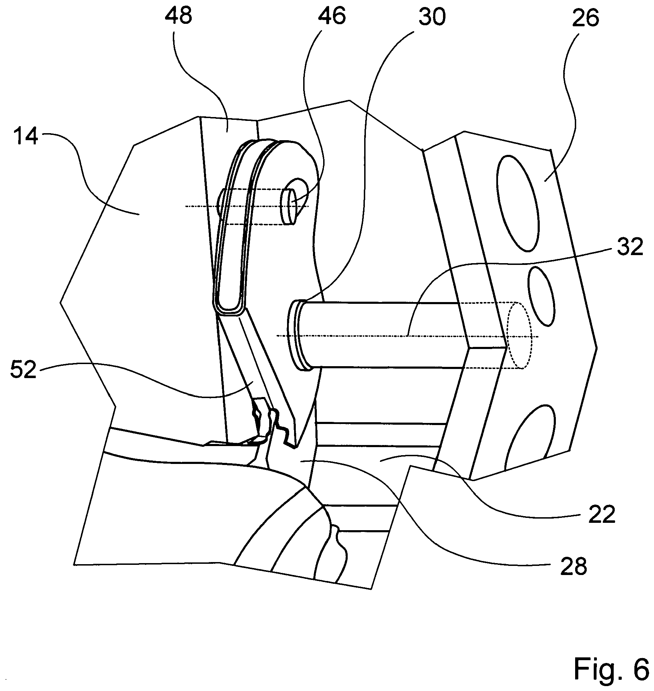

Zur Schwächung der mechanischen Festigkeit weist das Energieabsorptionselement 52 mehrere als Löcher ausgebildete Schwächungselemente 70 auf (Fig. 4 und Fig. 5), die in zwei zur Vorderkante 54 des Energieabsorptionselements 52 parallelen Reihen angeordnet und dazu vorgesehen sind, im Falle des durch Überschreitung des normalen Verstellbereichs der Rückenlehne 14 erzeugten zweiten Krafteinleitungswegs 62 Sollbruchrichtungen 72, 72' festzulegen. In Fig. 6 ist ein durch ein Aufprallereignis plastisch verformtes Energieabsorptionselement 52 in einem Fahrgastsitz dargestellt. Im Bereich einer Kontaktstelle zwischen dem unteren Bereich der Vorderkante 54 des Energieabsorptionselements 52 und dem Stützelement 28 ist das Energieabsorptionselement 52 entlang der Sollbruchrichtungen 72, 72' aufgerissen und nach außen aufgeweitet, so dass die Rückenlehne 14 frei beweglich bleibt und mit einem geringem Kraftaufwand in die Normalposition 18 verstellt werden kann. Durch das als Schneidkante ausgebildete Zentrierelement 66 des Stützelements 52 und ein korrespondierendes, als Rundkerbe ausgebildetes Zentrierelement 68 im unteren Bereich der Vorderkante 54 des Energieabsorptionselements 52, das dazu vorgesehen ist, das Energieabsorptionselement 52 im Falle der Überschreitung des normalen Verstellbereichs der Rückenlehne 14 zu zentrieren, kann eine kontrollierte Verformung des Energieabsorptionselements 52 erreicht werden (Fig. 4 und Fig. 5).

Durch die einem Aufrollen ähnelnde Verformung der Vorderkante 54 des Energieabsorptionselements 52 ist eine nach einer Überschreitung des normalen Verstellbereichs der Rückenlehne 14 von dem Energieabsorptionselement 52 aufgenommene Verformungsenergie im Wesentlichen proportional zu einer von dem Energieabsorptionselement 52 zurückgelegten Verschiebungsstrecke, die in Fig. 6 einer aufgerollten Strecke gleichgesetzt werden kann, so dass eine Energieaufnahme durch das Energieabsorptionselement 52 gleichmäßig erfolgt und Kraftstöße durch plötzliche Beschleunigungen bei der Energieaufnahme vorteilhaft vermieden werden können.

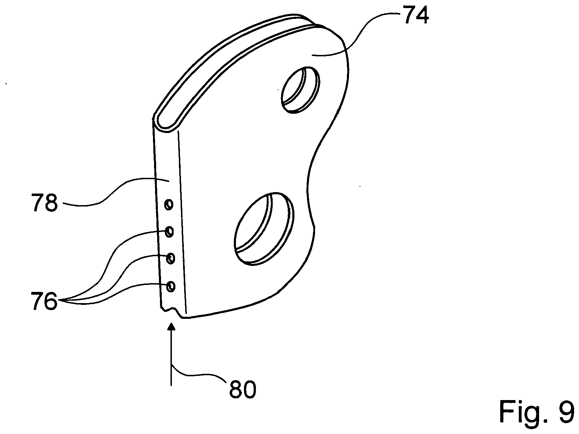

In der Fig. 9 ist ein weiteres Ausführungsbeispiel eines Energieabsorptionselements 74 dargestellt. Im Unterschied zum Ausführungsbeispiel der Fig. 1 bis 8 weist das Energieabsorptionselement 74 als Löcher ausgebildete Schwächungselemente 76 auf, die in einer zu einer Vorderkante 78 des Energieabsorptionselements 74 parallelen Reihe angeordnet und dazu vorgesehen sind, im Falle eines durch eine Überschreitung eines normalen Verstellbereichs einer Rückenlehne erzeugten zweiten Krafteinleitungswegs eine einzige Sollbruchrichtung 80 festzulegen.

**Bezugszeichen**

| | | | |
|---|---|---|---|
| 10 | Fahrgastsitz | 52 | Energieabsorptionselement |
| 12 | Boden | 54 | Vorderkante |
| 14 | Rückenlehne | 56 | Durchgangsloch |
| 16 | Vorwärtsrichtung | 58 | Durchgangsloch |
| 18 | Normalposition | 60 | Krafteinleitungsweg |
| 20 | Komfortposition | 62 | Krafteinleitungsweg |
| 22 | Sitzstruktur | 64 | Kopplungsstelle |
| 24 | Lagerzapfen | 66 | Zentrierelement |
| 26 | Sitzteiler | 68 | Zentrierelement |
| 28 | Stützelement | 70 | Schwächungselement |
| 30 | Lagerelement | 72 | Sollbruchrichtung |
| 32 | Lagerachse | 74 | Energieabsorptionselement |
| 34 | Durchgangsloch | 76 | Schwächungselement |
| 36 | Gasdruckfeder | 78 | Vorderkante |
| 38 | Langlocheinheit | 80 | Sollbruchrichtung |
| 40 | Sicherungselement | | |
| 42 | Sektion | | |
| 44 | Sektion | | |
| 46 | Kopplungselement | | |
| 48 | Rahmenelement | | |
| 50 | Energieabsorptionseinheit | | |

## Patentansprüche

1. Sitzvorrichtung eines Fahrgastsitzes (10), der eine Rückenlehne (14), die in einem normalen Verstellbereich von zumindest einer stabilen Komfortposition (20) durch eine Bewegung in eine Vorwärtsrichtung (16) bis zu einer Normalposition (18) verstellbar ist, und eine Sitzstruktur (22) zur Befestigung des Fahrgastsitzes (10) an einem Boden (12) aufweist, mit zumindest einem Stützelement (28) zur Kopplung der Rückenlehne (14) an die Sitzstruktur (22), mit zumindest einer Energieabsorptionseinheit (50) zur Aufnahme von Bewegungsenergie im Falle eines Aufprallereignisses, wobei die Energieabsorptionseinheit (50) das zumindest eine Stützelement (28) und ein von dem Stützelement (28) separat ausgebildetes Energieabsorptionselement (52; 74) umfasst und das zumindest eine Stützelement (28) und das Energieabsorptionselement (52; 74) im Falle des Aufprallereignisses zum Abbau einer Aufprallenergie zusammenwirken,
wobei
das Energieabsorptionselement (52; 74) dazu vorgesehen ist, bei einer Überschreitung des normalen Verstellbereichs der Rückenlehne (14) durch plastische Verformung Energie aufzunehmen, und
wobei
das zumindest eine Stützelement (28) zumindest ein Lagerelement (30) mit einer Lagerachse (32) zur drehbaren Lagerung der Rückenlehne (14) aufweist, und mit zumindest einem Kopplungselement (46), das bei der Überschreitung des normalen Verstellbereichs der Rückenlehne (14) ein Drehmoment um die Lagerachse (32) auf das zumindest eine Energieabsorptionselement (52; 74) ausübt,
**dadurch gekennzeichnet, dass** das Energieabsorptionselement (52; 74) das Stützelement (28) zumindest teilweise umgreift, wobei das bei der Überschreitung des normalen Verstellbereichs der Rückenlehne (14) von dem Kopplungselement (46) auf das zumindest eine Energieabsorptionselement (52; 74) ausgeübte Drehmoment um die Lagerachse (32) eine Klemmung des Energieabsorptionselements (52) bewirkt, wobei das Energieabsorptionselement (52; 74) zumindest ein Zentrierelement (68) umfasst, das dazu vorgesehen ist, das Energieabsorptionselement (52; 74) im Falle der Überschreitung des normalen Verstellbereichs der Rückenlehne (14) zu zentrieren, wobei das Stützelement (28) ein zu dem Zentrierelement (68) des Energieabsorptionselements (52, 74) korrespondierendes Zentrierelement (66) aufweist.

2. Sitzvorrichtung nach Anspruch 1,
**dadurch gekennzeichnet, dass**
innerhalb des normalen Verstellbereichs der Rückenlehne (14) ein erster Krafteinleitungsweg (60) einer auf die Rückenlehne (14) wirkenden Kraft in die Sitzstruktur (22) existiert und bei einer Überschreitung des normalen Verstellbereichs der Rückenlehne (14) ein zweiter Krafteinleitungsweg (62) einer auf die Rückenlehne (14) wirkenden Kraft in die Sitzstruktur (22) existiert und das Energieabsorptionselement (52; 74) eine Umlenkung eines Kraftflusses vom ersten Krafteinleitungsweg (60) zum zweiten Krafteinleitungsweg (62) bewirkt,
wobei bei Überschreitung einer vorbestimmten, in Vorwärtsrichtung wirkenden Kraft auf die Rückenlehne (14), beispielsweise im Falle des Aufprallereignisses, ein als Steg ausgebildetes Sicherungselement (40) dazu vorgesehen, zu brechen, eine größere Sektion (44) einer Langlocheinheit (38) des Stützelements (28) für eine Bewegung des als Zapfen ausgebildeten Kopplungselements (46) der Sitzvorrichtung freizugeben und eine Überschreitung des normalen Verstellbereichs der Rückenlehne (14) in der Vorwärtsrichtung (16) zu ermöglichen.

3. Sitzvorrichtung nach Anspruch 1,
**dadurch gekennzeichnet, dass**
das Kopplungselement (46) der Sitzvorrichtung als Zapfen ausgebildet ist und wobei durch das Kopplungselement (46), das sowohl eine kleinere Sektion (42) einer Langlocheinheit (38) des Stützelements (28) als auch zwei im oberen Teil des Energieabsorptionselements (52) angeordnete Durchgangslöcher (56, 56') durchdringt, bei einer Bewegung im normalen Verstellbereich der Rückenlehne (14) neben der Rückenlehne (14) und dem Stützelement (28) auch das Energieabsorptionselement (52, 74) um die Lagerachse (32) geschwenkt wird.

4. Sitzvorrichtung nach einem der vorhergehenden Ansprüche,
**dadurch gekennzeichnet, dass**
das Energieabsorptionselement (52; 74) zumindest ein Schwächungselement (70; 76) zur Schwächung der mechanischen Festigkeit aufweist.

5. Sitzvorrichtung nach Anspruch 3 und 6,
**dadurch gekennzeichnet, dass**
das Energieabsorptionselement (52; 74) zumindest zwei Schwächungselemente (70; 76) aufweist, die dazu vorgesehen sind, im Falle des durch Überschreitung des normalen Verstellbereichs der Rückenlehne (14) erzeugten zweiten Krafteinleitungswegs (62) eine Sollbruchrichtung (72; 80) festzulegen.

6. Sitzvorrichtung nach einem der vorhergehenden Ansprüche, **dadurch gekennzeichnet, dass**
eine nach einer Überschreitung des normalen Verstellbereichs der Rückenlehne (14) von dem Energieabsorptionselement (52; 74) aufgenommene Verformungsenergie im Wesentlichen proportional zu einer von dem Energieabsorptionselement (52; 74) zurückgelegten Verschiebungsstrecke ist.

7. Sitzvorrichtung nach einem der vorhergehenden Ansprüche, **dadurch gekennzeichnet, dass**
das Energieabsorptionselement (52; 74) in zumindest einer Schnittebene ein U-förmiges Profil aufweist.

## Claims

1. Seat device of a passenger seat (10), comprising a backrest (14) that is in a normal adjustment range adjustable from at least one stable comfort position (20) up to a normal position (18) by a movement in a forward direction (16), and comprising a seat structure (22) for a fixation of the passenger seat (10) to a floor (12),
with at least one support element (28) for a coupling of the backrest (14) to the seat structure (22),
with at least one energy absorption unit (50) for an absorption of kinetic energy in case of a crash event, the energy absorption unit (50) comprising the at least one support element (28) as well as an energy absorption element (52; 74) that is embodied separately from the support element (28), and the at least one support element (28) and the energy absorption element (52; 74) acting together in case of the crash event for a reduction of a crash energy,
wherein the energy absorption element (52; 74) is configured, if the normal adjustment range of the backrest (14) has been exceeded, to absorb energy by plastic deformation, and
wherein the at least one support element (28) comprises at least one bearing element (30) with a bearing axis (32) for a rotatable support of the backrest (14),
and with at least one coupling element (46) that, if the normal adjustment range of the backrest (14) has been exceeded, exerts a torque around the bearing axis (32) onto the at least one energy absorption element (52; 74), **characterized in that** the energy absorption element (52; 74) engages around the support element (28) at least partially, wherein the torque around the bearing axis (32), which is exerted onto the at least one energy absorption element (52; 74) by the coupling element (46) if the normal adjustment range of the backrest (14) has been exceeded, effects a clamping of the energy absorption element (52), wherein the energy absorption element (52; 74) comprises at least one centering element (68) which is configured to center the backrest (14) if the normal adjustment range of the backrest (14) has been exceeded, wherein the support element (28) comprises a centering element (66) that corresponds to the centering element (68) of the energy absorption element (52; 74).

2. Seat device according to claim 1,
**characterized in that,** within the normal adjustment range of the backrest (14), there is a first path (60) for an introduction into the seat structure (22) of a force that acts onto the backrest (14) and, if the normal adjustment range of the backrest (14) has been exceeded, there is a second path (62) for an introduction into the seat structure (22) of a force acting onto the backrest (14), and the energy absorption element (52; 74) effects a deflection of a force flux from the first force introduction path (60) to the second force introduction path (62), wherein, if a pre-determined force onto the backrest (14) that acts in a forward direction has been exceeded, for example in case of the crash event, a safeguarding element (40), which is embodied as a web, is configured
to break,
to release a larger section (44) of a long hole unit (38) of the support element (28) for a movement of the coupling element (46) of the seat device, which is embodied as a trunnion, and
to allow the normal adjustment range of the backrest (14) being exceeded in the forward direction (16).

3. Seat device according to claim 1,
**characterized in that** the coupling element (46) of the seat device is embodied as a trunnion, wherein in case of a movement in the normal adjustment range of the backrest (14), besides the backrest (14) and the support element (28) the energy absorption element (52; 74) is also pivoted around the bearing axis (32) by means of the coupling element (46), which goes through a smaller section (42) of a long hole unit (38) of the support element (28) as well as through two through holes (56, 56') that are arranged in the upper portion of the energy absorption element (52; 74).

4. Seat device according to one of the preceding claims,
**characterized in that** the energy absorption element (52; 74) comprises at least one weakening element (70; 76) for a weakening of the mechanical strength.

5. Seat device according to claims 3 and 6,
**characterized in that** the energy absorption element (52; 74) comprises at least two weakening elements (70; 76), which are configured to define a predetermined break direction (72; 80) if the second force introduction path (62) has been generated as the normal adjustment range of the backrest (14) has been exceeded.

6. Seat device according to one of the preceding claims,
**characterized in that** a deformation energy absorbed by the energy absorption element (52; 74) after the normal adjustment range of the backrest has been exceeded is essentially proportional to a displacement distance covered by the energy absorption element (52; 74).

7. Seat device according to one of the preceding claims,
**characterized in that** the energy absorption element (52; 74) has, in at least one section plane, a U-shaped profile.

## Revendications

1. Dispositif de siège de passager (10), comprenant un dossier (14), qui est, dans une plage normale d'ajustement, ajustable par le biais d'un mouvement en sens direct (16) d'au moins une position stable de confort (20) jusqu'à une position normale (20), et comprenant une structure de siège (22) pour une fixation du siège de passager (10) sur un sol (12), avec au moins un élément de support (28) pour un accouplement du dossier (14) à la structure de siège (22), avec au moins une unité d'absorption d'énergie (50) pour une absorption de l'énergie kinétique en cas d'un événement de choc, l'unité d'absorption d'énergie (50) comportant l'au moins un élément de support (28) et un élément d'absorption d'énergie (52 ; 74) implémenté séparément de l'élément de support (28), et l'au moins un élément de support (28) et l'élément d'absorption d'énergie (52 ; 74) coopérant, en cas de l'événement de choc, pour une diminution d'une énergie de choc,
où l'élément d'absorption d'énergie (52 ; 74) est configuré à absorber de l'énergie par déformation plastique en cas d'un dépassement de la plage normale d'ajustement du dossier (14), et
où l'au moins un élément de support (28) comporte au moins un élément palier (30) avec un axe de palier (32) pour un support rotatif du dossier (14),
et avec au moins un élément d'accouplement (46) exigeant, en cas d'un dépassement de la plage normale d'ajustement du dossier (14), sur l'au moins un élément d'absorption d'énergie (52 ; 74) un moment de rotation autour de l'axe de palier (32),
**caractérisé en ce que** l'élément d'absorption d'énergie (52 ; 74) entoure l'élément de support (28) au moins partiellement,
où le moment de rotation autour de l'axe de palier (32), qui est exigé par l'élément d'accouplement (46) sur l'au moins un élément d'absorption d'énergie (52 ; 74) en cas d'un dépassement de la plage normale d'ajustement du dossier (14), cause un serrage de l'élément d'absorption d'énergie (52),
où l'élément d'absorption d'énergie (52 ; 74) comporte au moins un élément de centrage (68) configuré pour centrer l'élément d'absorption d'énergie (52 ; 74) en cas d'un dépassement de la plage normale d'ajustement du dossier (14),
où l'élément de support (28) comporte un élément de centrage (66) correspondant à l'élément de centrage (68) de l'élément d'absorption d'énergie (52 ; 74).

2. Dispositif de siège selon la revendication 1,
**caractérisé en ce que,** dans la plage normale d'ajustement du dossier (14), il y a un premier chemin d'introduction (60) dans la structure de siège (22) d'une force agissant sur le dossier (14) et, en cas d'un dépassement de la plage normale d'ajustement du dossier (14), il y a un deuxième chemin d'introduction (62) dans la structure de siège (22) d'une force agissant sur le dossier (14),
l'élément d'absorption d'énergie (52 ; 74) causant un détournement d'un flux de force du premier chemin d'introduction de force (60) au deuxième chemin d'introduction de force (62),
où, en cas d'un dépassement d'une force prédéfinie, qui agit sur le dossier (14) en sens direct, par exemple en cas de l'événement de choc, un élément de sauvegarde (40) implémenté comme âme est prévu à rompre, ainsi
relâchant une section majeure (44) d'une unité trou oblong (38) de l'élément de support (28) pour un mouvement de l'élément de couplage (46), implémenté comme tourillon, du dispositif de siège
et permettant un dépassement de la plage normale d'ajustement du dossier (14) en sens direct (16).

3. Dispositif de siège selon la revendication 1,
**caractérisé en ce que** l'élément de couplage (46) du dispositif de siège est réalisé comme tourillon et où
par le biais de l'élément de couplage (46), qui pénètre une section plus petite (42) d'une unité de trou oblong (38) de l'élément de support (28) de même que deux trous traversants (56, 56') disposés dans la part supérieure de l'élément d'absorption d'énergie (52), en mouvement dans la plage normale d'ajustement du dossier (14), le dossier (14), l'élément de support (28) et aussi l'élément d'absorption d'énergie (52 ; 74) sont pivotés autour de l'axe de palier (32).

4. Dispositif de siège selon l'une quelconque des revendications précédentes,
**caractérisé en ce que** l'élément d'absorption d'énergie (52 ; 74) comporte au moins un élément d'atténuation (70 ; 76) pour une atténuation de la résistance mécanique.

5. Dispositif de siège selon les revendications 3 et 6,
**caractérisé en ce que** l'élément d'absorption d'énergie (52 ; 74) comporte au moins deux éléments d'atténuation (70 ; 76) prévus à définir, en cas du deuxième chemin d'introduction de force (62) résultant d'un dépassement de la plage normale d'ajustement du dossier (14), une direction de rupture théorique (72 ; 80).

6. Dispositif de siège selon l'une quelconque des revendications précédentes,
**caractérisé en ce qu'**une énergie de déformation absorbée par l'élément d'absorption d'énergie (52 ; 74) suivant un dépassement de la plage normale d'ajustement du dossier (14) est essentiellement proportionnelle à une distance de déplacement parcourue par l'élément d'absorption d'énergie (52 ; 74).

7. Dispositif de siège selon l'une quelconque des revendications précédentes,
**caractérisé en ce que** l'élément d'absorption d'énergie (52 ; 74) aie un profile en forme d'U dans au moins un plan de coupe.
